# EUROPEAN PATENT APPLICATION

(11) **EP 3 023 900 A1**
(43) Date of publication of application: **25.05.2016**
(21) Application number: 15195565.5
(22) Date of filing: 20.11.2015
(51) Int. Cl.: G06F 21/36, G06F 21/42

(54) **A METHOD, DEVICE AND SYSTEM FOR ACCOUNT RECOVERY WITH A DURABLE CODE**

(30) Priority: 21.11.2014 US 201462082900 P
(71) Applicant: Silent Circle, LLC, 1218 Le Grand-Saconnex (CH)
(72) Inventor: KOROKITHAKIS, Stavros, 53070 Filotas (GR); WRIGHT, Josh Adam, 13104 Manlius, New York (US)
(74) Representative: WSL Patentanwälte Partnerschaft mbB

(57) **Abstract**

A method for resetting credentials of an account of a user by a server and a database associated with the server is provided, the database including records of electronic accounts. The method includes logging into an account recovery website hosted by the server for requesting an account recovery, generating an account recovery item at the server and generating an optical code that represents the account recovery item, the account recovery item including identity information to identify the account of the user, and printing the optical code that represents the account recovery item onto an object with a printer. The method further includes capturing and processing an image of the optical code from the object to extract the identity information of the account recovery item, matching the identity information with the records of the electronic accounts of the database at the server, and prompting the user to update account credentials.

## Description

### FIELD OF THE INVENTION

The present invention relates to methods, devices, and systems in the field of electronic account recovery and account credential recovery and reset by using a recovery code.

### BACKGROUND

When a user of an online service, for example an e-mail account, social media website, online store, travel website, forgets his username and/or password, the user can only access his account again by recovering his credentials. Conventionally, the recovery of the credentials involves replacing the old password with a new one. Current methods of recovering credentials for accessing the web service require that a user visits the credential recovery web page and requests that the account be reset. Thereafter, a hyperlink is sent to the registered user via a preregistered e-mail address or an e-mail address that has been provided within the credential recovery process, the hyperlink including a token that usually has a short life span, thereby using a third-party e-mail service to deliver the hyperlink to the user that has requested recovery of the credentials.

However, as explained above, the currently used recovery methods have the disadvantage that a third-party e-mail service needs to be used, for example the use of a third party e-mail service for sending the e-mail to the user with the hyperlink. Also, conventionally it is the user who chooses the e-mail service that he wants to use as an e-mail delivery service, and therefore, the security policy of the e-mail service cannot be determined or controlled by the web service that requires the user to establish new credentials. In addition, for security reasons, the recovery process generates a hyperlink including a token with a short life span, so that the user needs to reset his account credentials within a very short period of time. Therefore, in the field of account recovery and renewal of account credentials, despite all the solutions that are currently in use, still further improvements and new solutions are strongly desired.

### SUMMARY

In one aspect of the present invention, a method for resetting credentials of an account of a user by a server and a database associated with the server is provided, the database including records of electronic accounts. Preferably, the method includes the steps of logging into an account recovery website hosted by the server for requesting an account recovery, generating an account recovery item at the server and generating an optical code that represents the account recovery item, the account recovery item including identity information to identify the account of the user, and printing the optical code that represents the account recovery item onto an object with a printer.

In addition, the method further preferably includes the steps of capturing an image of the optical code from the object to generate an electronic image, processing the electronic image to extract the identity information of the account recovery item, matching the identity information with the records of the electronic accounts of the database and prompting the user to update account credentials when the step of matching the identity information is able to find the account of the user.

According to another aspect of the present invention, a system for generating a quick response code that allows resetting credentials of an account of a user is provided. Preferably, the system includes a server having at least one hardware processor and being connected to the internet, the server hosting a web page for generating and providing an quick response code to a user for resetting the credentials of an account, and a database associated with the server, the database including records of electronic accounts of users. Moreover, the server is preferably configured to determine an identify of a user and an account associated with the user when the user logs into the web page for generating and providing the quick response code, generate a quick response code at the server, the quick response code encoding a hyperlink to an account credentials reset webpage and a code for identifying the account of the user, and display the quick response code on the web page and allowing the user to print the quick response code.

The summary of the invention is neither intended nor should it be construed as being representative of the full extent and scope of the present invention, which additional aspects will become more readily apparent from the detailed description, particularly when taken together with the appended drawings.

### BRIEF DESCRIPTION OF THE DRAWINGS

FIG. 1 shows a diagrammatic representation of a method M100 that is performed on a hardware computer system for generating an account recovery item;
FIG. 2 shows an diagrammatic representation of a method M200 that is performed on a hardware computer system for recovering an account based on the account recovery item; and
FIG. 3 shows an exemplary schematic representation of a hardware computer and network system and devices that can be used for implementing the methods in accordance with another aspect of the embodiments of the present invention.

Herein, identical reference numerals are used, where possible, to designate identical elements that are common to the figures. The images in the drawings are simplified for illustrative purposes and are not necessarily depicted to scale.

### BRIEF DESCRIPTION OF THE SEVERAL EMBODIMENTS

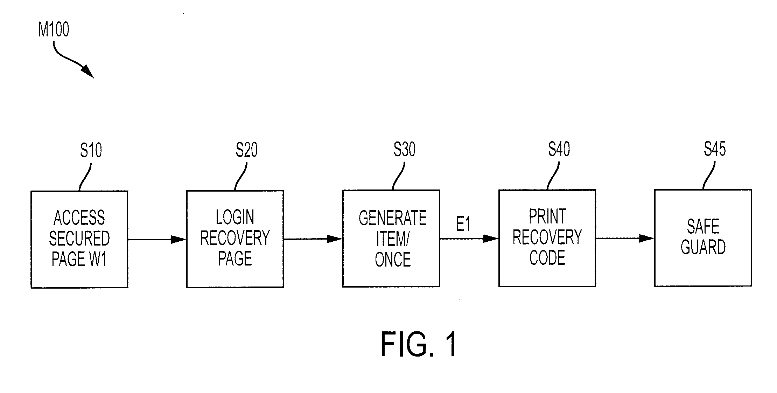

FIG. 1 schematically shows a method M100 for generating a code that can be used for recovering electronic account credentials according to an aspect of the present invention. In a first step S10, the user U accesses a recovery request webpage W1 that is under control by operator O, the recovery request webpage W1 is configured and dedicated to generate a one-time account recovery item or nonce 34 that is personal to the account of user U, by using his terminal 40, 42, 44, 46. Operator O can be a company that is running an electronic web services with users having an electronic account, for example but not limited to e-mail service operators, bank account information services, cloud computing services. User U can use his desktop terminal 40 to access a webpage W1 that is generated by server 20 and database 22, the generation of webpage W1 being under the control of operator O. Preferably, operator O uses a server 20 that located at safe premises with strong data protection including firewall protection and limited access to server 20, and can also be located at a geographic location with strong data privacy and protection laws, and the recovery request webpage W1 can be hosted by the server 20. Preferably, the connection between the user U with terminals 40, 42, 44, 46 and server 20 is encrypted with a Secure Sockets Layer (SSL), Transport Layer Security (TLS) or other form of strong encryption, and thereby it can be ensured that only operator O and user U have access to the one-time account recovery item or nonce 34. Server 20 is connected to the Internet 30 via a firewall 24. Database 22 is configured to store records of electronic accounts and the users U associated to these accounts, including, for each users, account credentials including user name, password, security questions, an account identifier, and other information that allow to identify the account, history of account accesses and changes. Server 20 can be a webserver with data security protection that has a plurality of hardware processors and associated local memory for data and information processing.

Next, in a step S20, user U logs into the account recovery web page W1. Upon accessing webpage W1, the user can be authenticated, for example by being prompted to enter his username and his password so that recovery request webpage W1 can generate an account recovery item or nonce 34. Once user U has authenticated himself, server 20 provides for a graphical user interface that allows the user U to request the generation of the one-time account recovery item or nonce 34, and an associated code 71 that incorporates the information of the one-time account recovery item 34. It is also possible that account recovery web page W1 request the user U to answer certain security questions that may have been predefined by user U, before allowing the generation of item 34. The access to the account recovery webpage W1 can have certain restrictions for security purposes, and the security policy can be managed by server 20. For example, it is possible that user U can only generate the one-time account recovery item 34 within a certain time frame upon opening and establishing his account at operator O, and thereafter, the generation of item 34 is not possible anymore. For example, upon creation of an account at server 20, the user U may only be able access the recovery request webpage W1 within 72 hours, 7 days, one month, etc. to generate the one-time account recovery item 34, and thereafter, the use of webpage W1 for generation of the one-time account recovery item 34 expires.

As another security policy, it is possible that the terminal 40, 42, 44, 46 used by the user U to access webpage W1 fulfill certain security standards, and need to be preregistered at server 20 in order for user U to be able to access and use webpage W1 for generating one-time item or nonce 34. Terminals can be pre-registered for example but not limited to by the Internet Protocol (IP) address, device serial numbers, biometric user information. For example, server 20 could require a certain level of encryption for operating a web browser used by terminals 40, 42, 44, 46, and the local area network used by terminals 40, 42, 44, 46 that access Internet 30 could be required to fulfill certain security standards, for example Wi-Fi Protected Access (WPA) and Wi-Fi Protected Access II (WPA2) security protocols. The generation of one-time account recovery item 34 by server is done by a cryptographically secure random number generator (RNG) or pseudo random number generator (PRNG) to ensure that it is very difficult to be guessed by third parties.

Thereafter, in a step S30, the account recovery item or nonce 34 and an associated optical code 71 is generated. Basically, the one-time account recovery item 34 is a data set that includes information that can identify a registered user's account in the database 22 for a lifetime of the existence of the account. For example, once user U is signed into his account, a graphical user interface of the recovery request web page W1 prompts the user to make a request for a one-time account recovery item 34, for example by pressing or selecting an icon on a graphical user interface of web page W1. In an alternative, once user U has been authenticated, the account recovery item 34 and optical code 71 is automatically generated, or it is also possible that the generation of account recovery item 34 is one choice of many options when a user U logs into his account. The account recovery item 34 is generated by using identity information that allows identifying the account of user U at server 20, for example a unique code or an encoded variant thereof that is assigned to the account linked to the database entry of the account of user U in database 22 or otherwise stored in the account records for user U. The unique code that identifies the account of user can be encrypted based on an algorithm to be included in the account recovery item 34. Next, information of the one-time account recovery item 34 is encoded into an optical code 71, for example a quick response (QR) code 71 or other type of matrix codes or bar codes. The account recovery item 34 can further include a uniform resource locator (URL) or other link that provides for a web address of an account recovery web page W2, the account recovery web page W2 preferably hosted by server 20. For example, item 34 can contain the full URL to account recovery web page W2, and optionally can also include the username of user U or other identifying information that allows identifying the user's account. For example, a random token as identity information can be used, because probabilistically, it would be highly unlikely that two identical random tokens will ever be generated, if the random token is of sufficient size. The username and the identity information can be embedded in the URL itself. Generally, account recovery item can include identify information that is a sufficiently long random token, can include an URL to the web page W2, and can further include for example but not limited to an username of the user U of the account, a secret user identifier, an email address. If more information is added, a larger optical code 71 may be required to represent the additional information.

Also, it is possible that the optical code 71 is a QR code or a similar code that only includes an URL to web page W2 with identity information of the account of the user U embedded thereon in an encoded form, without any other information. For example, the QR code could have the following information:
https://accounts.silentcircle.com/recover/?token=ayh60s6jf0
With the example above, the optical code 71 includes information of a full hyperlink to a web page W2 for account recovery, and also includes encoded and encrypted identity information that allows identifying the account of the user U that is registered at database 22, with the ten-digit encrypted code word or token "ayh60s6jf0." Another variant of the information included in the QR code is the following:
https://accounts.silentcircle.com/recover/?username=stavros&token=ayh60s6jf0
In the above variant, not only the encrypted code word or token is provided but also the username of the user U. However, account recovery item 34 can include other information that is linked to the account information of user U, and can also include an encrypted variation of the name or other credentials of user U, for additional security. Moreover, it is also possible that the encoding of the QR code itself is customary to the operator O and not based on standard encoding by using a specific cryptographic encoding algorithm unknown to the users, so that the QR code cannot be read by unauthorized parties that would scan the code 71.

The database entries for the account of the user U can be thereafter updated to include information of a time and date of generation and provision of the optical code 71 and information of the account recovery item 34, and a count number associated with the account recovery item. This allows to track all the account recovery items 34 generated by user U, if this is permissible. Also, the account recovery item 34 and code 71 are durable codes that can be made to last for a lifetime of the account of the user U. It is also possible that server 20 is configured to only allow the generation of a single account recovery items 34, and once a user U generates such item 34 and code 71, it is not possible to generate a new item 34. In another variant, every time a new one-time account recovery item 34 and associated code 71 is generated by user U, the old items 34 are deleted from the record of the database 22, so that the old codes are not operational anymore, but for the one that has been generated the latest.

Next, also with step S30, the optical code 71 can be printed or otherwise made visible or embodied onto an object, for example but not limited to by printing code 71 onto a sheet of paper 70.1 by a printer 60, embedding a hologram code 71 by a thin-film depositing machine onto a substrate. The optical code 71 that represents the account recovery item 34 can be displayable onto display 41, 43, 45, 47 with a graphical user interface of computer 40, and can be represented by an electronic image E1 that has been generated from the code 71, for example a JPEG image, PDF image, BMP image, postscript image of an optical code 71, or can also be a three-dimensional optical code, hologram code. Upon generation of the account recovery item 34 and the optical code 71, it is possible that server 20 can block any access to the account of user U, and only upon chancing account credentials by user U with recovery item 34, his account could be accessed again.

For generating account recovery item 34 and code 71, upon authenticating the user at web page W1, web page W1 can automatically execute an applet or script that generates an account recovery item 34 and thereafter generates an optical code 71 by encoding information of the account recovery item 34, and then generates an electronic image E1 of the optical code 71, for example a JPEG image. Next, web page W1 can display electronic image E1 of optical code 71 on the graphical user interface of display 41, 43, 45, 47 of user terminals 40, 42, 44, 46, for example personal or Macintosh™ computer 40, a tablet computer 44, smart phone 42, or wireless device 46. In a variant, instead of generating two-tone QR code for the optical code 71 to represent account recovery item 34, it is also possible that another type of computer readable code is generated, that can be incorporated, printed, or otherwise made part of a physical object 70.2 that can be safeguarded by user U, and is later readable by a camera of another type of optical scanning or optical image capturing device. For example, optical code 71 could be a traditional barcode, color code, a text passage, or could be also embodied as a three-dimensional code that could be printed with a three-dimensional printer 62 in the form of a three-dimensional object 70.2

Also, in a variant, it is also possible that information of the account recovery item 34 be embedded as a visible code into an preexisting electronic image EI that depicts a certain scenery, for example as a watermark or other visible code into a landscape image, such that the image EI including an embedded version of item 34 forms the code 71. The account recovery item 34 could be embedded such that it would not be readily viewable by a human eye in the image, for example as dots scattered throughout the image with a specific color, including a redundant code scheme to easier decoding, in case a part of image EI is destroyed or of poor print quality. In this variant, step S30, first an electronic image EI of a landscape, city, building or other generic image is chosen from a set of images that are available at database 22 of server 20. Next, the chosen electronic image EI is processed to embed a watermark or other visible code such that the code cannot be readily detected by a human eye. The code includes all the data of the account recovery item 34. The account recovery item 34 that could be extracted from the electronic image EI by a watermark extraction process with image processing algorithms, without the necessity of having to analyze the underlying electronic data of the image EI. Thereby, an image could be printed onto a sheet 70.1 that would not be immediately recognizable to human users as containing information, as the information of the account recovery item 34 would be embedded as a watermark or in other ways detectable by machine vision. With step S30, the server 20 can generate optical code 71 with solely encoded and encrypted information of the account recovery item 34 that is entirely free of data information that allows identifying the user. For example, account recovery item 34 is free of any e-mail addresses, real names, geographic locations, of user U. User U never enters his e-mail address, or other address that would allow identifying him by a third party. In addition, the method M100 does not require the use of any external web services, e-mail services, file servers, as the services for accessing secured web page W1, login to account, and generate account recovery item is entirely performed at local server 20.

Next, a step S40 is performed, in which the user U makes generates a physical copy of the one-time account recovery item 34. For example, the user U may instruct his terminal 40, 42, 44, 46 to print a copy of the QR code 71, or any other embodiment of the one-time account recovery item 34, onto a sheet of paper 70.1 with a printer 60. A security policy can be implemented to the terminal 40, 42, 44, 46 of user U to allow the user U to print the QR code 71 only if the security policy is fulfilled. For example, to avoid that information of the one-time account recovery item 34 be sent over a unsecured network, the web page 20 could check whether a locally connected printer 60 is present, and only allows the printing of QR code 71 if such printer is present. It is also possible that the electronic image E1 of code 71 is only generated and displayed by server 20 if the server 20 can confirm that a printer 60 that is connected to terminal 40, 42, 44, 46 has a secure connection, for example is a local printer not shared over an open network. Another security policy is a time constraint on the user U to print QR code 71 within a certain time period so that the user needs to print the code 71 onto a sheet of paper 70.1 within predetermined time constraints.

In another variant, instead of printing or otherwise generating a physical copy of electronic image E1 that represents QR code 71, it is also possible to transmit and store an electronic copy of image E1 onto a secure dongle 61, for example a secure storage device that can be plugged in via an universal serial bus (USB) port of terminals 40, 42, 44, 46, or allows for a secure and local wireless transmission of electronic image E1, for example a Bluetooth™ connection between terminals 40, 42, 44, 46 and secure dongle 61. Data content of secure dongle 61 itself can be encrypted and access protected, for example but not limited to by user authentication credentials, biometric data check. Electronic image E1 can therefore be electronically safeguarded and stored for later upload for account credential recovery. Secure dongle 61 can also be physically stored, similar to a sheet of paper 60.1 or a substrate 60.2 that embodies the code 71.

In a variant, the information of the one-time account recovery item 34 is never displayed on the terminal 40, 42, 44, 46 of user U, nor is any information with respect to the account recovery item 34 sent over the Internet 30 to terminals 40, 42, 44, 46, but the method generates with step S30 the code 71 for one-time account recovery item 34 locally at server 20 and this information is never shared over any electronic data network. Instead, the code 71 is printed locally with printer 26 or other two-dimensional or three-dimensional image forming device onto a sheet of paper 90.1 or other substrate, and is thereafter sent to user U to a physical address in step S40 with paper 90.1 placed in secured envelope 92 with a postal service PO. For this purpose, the user U can have a physical address registered with is account at server 20, and this address can only be modified upon authentication by user U. For sending the sheet of paper 70.1 to user U, a special mail delivery service can be used that allows for one day or overnight shipment or international shipment by postal service PO, such as but not limited to UPS™, DHL™, FedEx™. Also, in another variant, the user U, upon logging into his account at server 20, it is possible that he can choose between the display of the electronic image E1 of one-time account recovery item 34 as code 71 onto one of the terminals 40, 42, 44, 46 that is less secure but faster, the provision of a printed version of electronic image E1 onto paper 90.1 that is delivered by a postal service PO by snail mail, and/or the provision of the account recovery item on a secure dongle 91 that can also be delivered to user U by a postal service PO. Next, in a step S45, the user U safeguards the physical embodiment of his account recovery item 34 at a safe location, safe from any electronic network access.

Moreover, in a variant, steps S10, S20, and S30 can be performed via an application that is installed on terminal 40, 42, 44, and 46, for example a smartphone app that is installed on smart phone 44. Thereby, it is not necessary to access web page W1, but the request for a account recovery item 34 is done by the user U via the application of smart phone 44. For example, the application can have a specific menu that allows generating the account recovery item 34 and a corresponding optical code 71, and the application thereby communicates via the cellular data network 32 with server to fulfill these tasks. The user can thereby access a menu that allows him to access a recovery menu, in which the identity of the smart phone 44 can be verified, and thereafter the server 22 can generate account recovery item 34 and optical code 71 that are sent back to smart phone 44. Also, it is possible that data of the account recovery item 34 is sent to smart phone 44, and the application that is installed on smartphone 44 generates the optical code 71 with a code generating application.

By the above described method M100, the user U can be in physical possession of a one-time account recovery item or nonce 34 that can be physically stored, for example at a safe location in his residence or office, or even in bank safe box, and it can be guaranteed that the underlying information of the item 34 was never made available to any third parties. Preexisting technologies for account recovery use short-lived tokens that are delivered by email, after the user U has answered one or more security questions. By using such email delivery, one or more intermediaries may be in possession of the account recovery method. The present method M100, the one-time account recovery item or nonce 34 is easy accessible to the user U without that any data leakage issues that may arise.

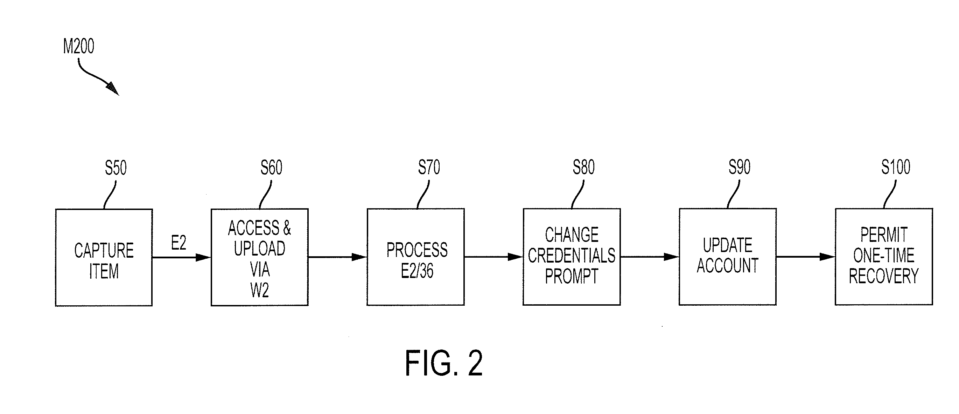

Next, FIG. 2 shows an exemplary method M200 that allows user U to recover his account. The user U may have forgotten at least one of his password and his username, or he wants to perform a voluntary safety reset of his account credentials for security reasons, for example because he suspects or knows that someone has had access to his account credentials. First, in a step S50, the user U accesses his sheet 70.1 or object 70.2 that has code 71 encoding the one-time account recovery item 34 printed or otherwise represented thereon. Thereafter, user U uses a camera 50, 52, 54, 56 of a respective terminal 40, 42, 44, 46, or other optical data capturing device, and captures an electronic image E2 of the code 71 on sheet 70.1 or object 70.2 that represents the account recovery item 34. In another variant, code 71 is scanned by a scanner, a camera, or another separate device that can capture an electronic image E2 of code 71, and the electronic image E2 of the separate device is in an electronic data form, such as but not limited to a portable document format (PDF) image, a lossless portable network graphics (PNG) image format or another lossless image data format to preserve the data, a encapsulated postscript image (EPS), a Joint Photographic Experts Group (JPG) image that can be uploaded to server 20. Other devices can also be used to capture an electronic image E2 of optical code 71. For example, in case a three-dimensional object or device 70.2 for representing optical code 71, instead of using a camera, a three-dimensional scanner can be used, or a stereoscopic or time-of-flight sensor that allows to capture a three-dimensional profile of device 70.2, so that an electronic image E2 can be generated from code 71 that includes the information of the one-time account recovery item 34.

In a variant, user U accesses an account recovery web page W2 for uploading electronic image E2 to server 20 via Internet 30. Recovery web page W2 is usually operated by the same server 20 that also hosts and operates the recovery request web page W1, and is secured from unauthorized access. For this purpose, recovery web page W2 generates a graphical user interface that prompts the user to upload the electronic image E2 of the code 71 that represents account recovery item 34. This can be done with webpage W2 having a file browser that permits user U to select the file of the electronic image E2 for uploading to server 20 via the web page W2. No other information needs to be provided for the account recovery, as electronic image E2 includes image information of code 71 that itself includes data of the account recovery item 34 with all necessary information for server 20 to identify the user and his account. However, it is also possible that in step S60, some image and data extraction processing is performed on electronic image E2 at the level of terminal 40, 42, 44, 46 to extract account recovery item 34, so that only the account recovery item 34 is uploaded to server 20 in data packet 36, and not the electronic image E2. The uploading of electronic images E2 of code 71 could be limited to images captured from a specific application of terminals 40, 42, 44, 46, such that images E2 of code 71 that were not captured by the application-internal camera function of the specific application cannot be uploaded to web page W2. Also, specific data that identifies the terminal 40, 42, 44, 46 can also be added to electronic image E2 as metadata for additional security, to see whether the user U is using an authorized terminal.

In the case the optical code 71 includes data on an URL to account recovery web page W2 for example as a QR code that has the URL encoded therein, it is possible that a QR code reader that is operable on terminals 40, 42, 44, 46 of user U is used to perform step S50, and that the QR code reader, upon reading optical code 71, directly prompts the user to access the web page W2 identified by code 71 to perform step S60. The electronic image E2 would thereby be processed by terminal 40, 42, 44, 46 with QR code reader to extract account recovery item 34, and not by server 20. Also, it is possible that the QR code has been generated by a non-standard encoding that is customary to operator O, and that the QR code reader installed on the user's terminal 40, 42, 44, 46 is configured to decode the QR code by using the non-standard encoding scheme. Also, the optical code 71 includes identify information of the account of user U that can be matched with identify information of database entries in database 22 to find the account, it is possible that the identity information was encoded and encrypted for security purposes, and has been embedded as a code into the URL.

In a variant, to provide for additional security, the capturing and uploading of electronic image E2 with step S50 and S60 can be performed by a specialized application that is installed on a cellular phone or smartphone 42 having a camera 52. The application and the web page W2 could be designed such that only pre-registered phones and corresponding application can access the web page W2, or a web portal at server 22 for the specialized applications, for example such that the web page W2 or a corresponding web portal is configured to verify identify information of the user U or smartphone 42, for example the International Mobile Station Equipment Identity (IMEI) number of the smartphone 42, the telephonic number of the smart phone 42, subscriber identity module (SIM) unlock code, login password of user U, device serial number of smart phone 44, IP address, or a combination thereof. For this purpose, specific data that identifies a terminal 40, 42, 44, 46 of user U can be stored to the account data entries of his account at database 22. Also the specialized application could extract hyperlink or other address information of from the code 71 to access a web portal at server 22, and could send the extracted, but still encrypted information of the one-time account recovery item as a data packet 36 to server 22 via the web portal, without the need for having a web page 22 hosted by server 20.

In another variant, a dedicated software is already installed at terminals 40, 42, 44, 46 that allows the user to capture electronic image E2 and can perform some image and data processing on electronic image E2 to extract and at least partially decode and decrypt account recovery item 34, so that a data packet 36 with this information can be sent to server 20 for recovering the account credentials of a user U, via a webpage W2 or a web portal. For example, steps S50 and S60 can be done by a secure application that is specific to operator O of the server 20, and is installed on terminals 40, 42, 44, 46. This allows including an additional layer of security before transmitting the data packet 36 to server 20. It is also possible that the dedicated software includes a standard QR code capturing and reading function, as explained above.

Next, in a step S70, server 20 has received the data packet 36 that includes either electronic image E2 of code 71 or the already extracted account recovery item 34. In case electronic image E2 is received, server 20 performs image processing, decoding and decryption on the uploaded electronic image E2 to extract data of the account recovery item 34 that allows server 20 to identify the user, and searches database 22 to match the information with a registered user. In a variant, the server 20 receives a data set from terminal 40, 42, 44, 46 that has been decoded from optical code 71, the data set being an encrypted version of the one time-data recovery item 34, and the full decryption of the data set allows to extract the one-time account recovery item 34 and is performed at the server 20, so that none of the terminals 40, 42, 44, 46 has knowledge of the decryption algorithm. The data of account recovery item 34 can be entirely free of any data information with respect to the e-mail or physical address of user U, but permits server 20 to identify the account of user U in the database 22, as the data of the account recovery item is linked to a user U in the database 22. Next, in step S70, the data of the account recovery item 34, especially the identity information, is matched by searching the database entries of the electronic accounts of the user U in database 22, so that server 20 can locate the account of user U. For example, the account recovery item 34 includes an unique code as identity information associated to user U that serves as an identifier for his account, and the server 20 then attempts to match the unique code with the database entries of all identifiers of the electronic accounts, as the unique code was linked to his account in step S30. In a variant the identity information is an encrypted version of the username of the user U, and step S70 first decodes the data that represents the username, and thereafter uses the username, which at time of setting up the account has chosen to be unique for each user of server 20, to search for the account of user U.

Next, in step S80, once in step S70 the presence of an account that belongs to user U has been confirmed based on extracted account recovery item 34 and the database entries, and that the user U has a valid account, or has an account that has been temporarily blocked, the user is prompted by a graphical user interface of web page W2 to set up at least a new password for his account, and can also prompt for a new username. It is also possible that new security questions are specified at this stage with web page W2 that would be required to be answered when step S20 is performed. The user can enter this information via graphical user interface of webpage W2. Thereafter, a step S90 is performed, in which the new account credentials that have been entered by user U are saved in association with his account at database 22. In case access to the account of user U has been blocked in step S30, in a step S100, the account of user U is unlocked so that it can be accessed again, upon using the new set of account credentials.

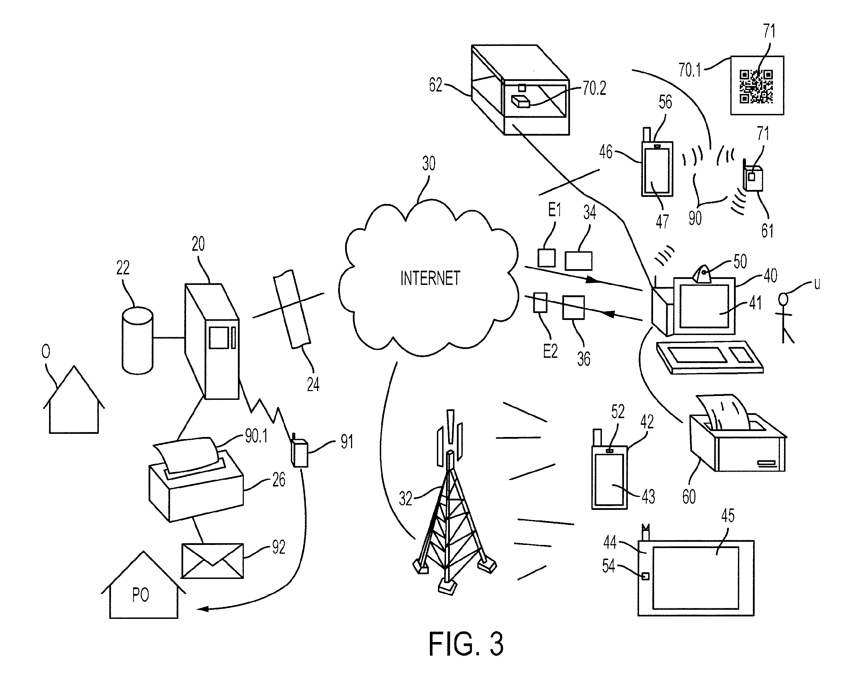

FIG. 3 shows an exemplary and schematic representation of a hardware system environment for performing the methods M100 and M200 described above. Operator O is shown that operates a server 20 and a database 22 that stores a plurality of accounts for users U. Server can be single device or multiple unit server, having a plurality of hardware processors that are configured to execute computer code to perform different methods and programs for user account management for electronic accounts. A firewall 24 can be located between network 30, i.e. the Internet, and server 20 to provide for secure and authorized access to server 20. User U may have access to different terminals 40, 42, 44, and 46 that are all connected to the Internet 30. Terminal 40 could be a desktop personal computer or Apple™ Macintosh computer 40 with display 41, camera or other type of image capturing device 50 that is connected to desktop computer 40, also having a printer 60 and a three-dimensional printer 62 connected thereto. Terminal 46 could be a wireless terminal device 46 that can connect to a Wifi network 90 that in turn is connected to the Internet 30 via a router and modem, the wireless terminal device having a camera or other type of image capturing device 56 and a display 47, for example a tablet computer. Terminal 42 could be a cellphone or a smart phone 42 having a display 43 and a camera or other type of image capturing device 52, smart phone 42 being able to connect to the Internet via a cellular data network 32 via base stations. Moreover, server 20 can also access a printer 26 or other device that allows to create a physical embodiment of code 71 onto an object, for example by printing code 71 onto a sheet of paper, or accessing a secure dongle 91 for storing an electronic copy of code 71.

While the invention has been disclosed with reference to certain preferred embodiments, numerous modifications, alterations, and changes to the described embodiments are possible without departing from the sphere and scope of the invention, as defined in the appended claims and their equivalents thereof. Accordingly, it is intended that the invention not be limited to the described embodiments, but that it have the full scope defined by the language of the following claims.

## Claims

1. A method for resetting credentials of an account of a user by a server and a database associated with the server, the database including records of electronic accounts, comprising the steps of:
logging into an account recovery website hosted by the server for requesting an account recovery;
generating an account recovery item at the server and generating an optical code that represents the account recovery item, the account recovery item including identity information to identify the account of the user;
printing the optical code that represents the account recovery item onto an object with a printer;
capturing an image of the optical code from the object to generate an electronic image;
processing the electronic image to extract the identity information of the account recovery item;
matching the identity information with the records of the electronic accounts of the database at the server; and
prompting the user to update account credentials when the step of matching the identity information is able to find the account of the user.

2. The method of resetting credentials of the account according to Claim 1, the method further including:
sending the object with the optical code via a postal service to a physical address of the user before the step of capturing the image of the optical code.

3. The method of resetting credentials of the account according to Claim 1, the method further including:
displaying the optical code at a display of a terminal used by the user before said step of printing the optical code.

4. The method of resetting credentials of the account according to Claim 1, wherein the account recovery item further includes a link to a webpage, the webpage configured to reset and update account credentials.

5. A system for generating a quick response code that allows resetting credentials of an account of a user, the system including:
a server having at least one hardware processor and being connected to the internet, the server hosting a web page for generating and providing an quick response code to a user for resetting the credentials of an account; and
a database associated with the server, the database including records of electronic accounts of users, the server configured to:
determine an identify of a user and an account associated with the user when the user logs into the web page for generating and providing the quick response code;
generate a quick response code at the server, the quick response code encoding a hyperlink to an account credentials reset webpage and a code for identifying the account of the user; and
display the quick response code on the web page and allowing the user to print the quick response code.

6. The system for generating a quick response code according to Claim 5, wherein the server is further configured to:
applying a cryptographic algorithm to the hyperlink to the account credentials reset webpage and the code for identifying the account of the user before genearing the quick response code.
